(19) Europäisches Patentamt
European Patent Office
Office européen des brevets

(11) **EP 3 712 575 B1**

(12) **EUROPÄISCHE PATENTSCHRIFT**

(45) Veröffentlichungstag und Bekanntmachung des Hinweises auf die Patenterteilung:
**09.08.2023   Patentblatt 2023/32**

(21) Anmeldenummer: **19164676.9**

(22) Anmeldetag: **22.03.2019**

(51) Internationale Patentklassifikation (IPC):
**G01G 19/03** *(2006.01)*      **G01M 1/12** *(2006.01)*

(52) Gemeinsame Patentklassifikation (CPC):
**G01G 19/035; G01M 1/122**

(54) **FÖRDERVORRICHTUNG UND VERFAHREN ZUM BESTIMMEN EINES MASSENSCHWERPUNKTS EINES STÜCKGUTTEILS**

CONVEYOR DEVICE AND METHOD FOR DETERMINING A CENTRE OF GRAVITY OF A PIECE ITEM

DISPOSITIF DE TRANSPORT ET PROCÉDÉ DE DÉTERMINATION D'UN CENTRE DE GRAVITÉ DE MASSE D'UNE PARTIE DE MARCHANDISE DE DÉTAIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.09.2020   Patentblatt 2020/39**

(73) Patentinhaber: **BEUMER Group GmbH & Co. KG 59269 Beckum (DE)**

(72) Erfinder: **Jesper, Jan 33129 Delbrück (DE)**

(74) Vertreter: **Philipp, Matthias Boehmert & Boehmert Anwaltspartnerschaft mbB Pettenkoferstrasse 22 80336 München (DE)**

(56) Entgegenhaltungen:
WO-A1-03/019122      JP-A- H06 123 669
JP-A- 2010 085 182

**Beschreibung**

Die Erfindung betrifft eine Fördervorrichtung und ein Verfahren zum Bestimmen der Lage eines Massenschwerpunkts eines Stückgutteils.

Aus dem Stand der Technik sind verschiedene Verfahren und Vorrichtung zur Bestimmung von Schwerpunkten in Stückgutteilen auf Förderbändern oder anderen Fördereinrichtung bekannt. In bekannten Verfahren und Vorrichtungen wird dabei ein Paket oder ein sonstiges Stückgutteil über eine Kante befördert. Die Kante bildet einen Hochpunkt zwischen zwei Förderabschnitten des Förderbandes/der Fördereinrichtung. Durch optische Sensoren wird dabei der Zeitpunkt ermittelt, wann eine Kippbewegung des Stückgutteils einsetzt. Eine solche Vorrichtung ist zum Beispiel aus US 2003/0075416A1 bekannt, welche als nächstliegender Stand der Technik für die Erfindung anzusehen ist.

Diese Vorrichtungen und Verfahren weisen verschiedene Nachteile auf. So ist der Massenschwerpunkt mit einem solchen Verfahren nur in einer Koordinatenrichtung bestimmbar. Um die Schwerpunktlage des Stückgutteils in einer zweiten Koordinatenrichtung ermitteln zu können, muss zumindest eine Richtungsänderung der Förderrichtung um 90° vorgesehen sein. Um die Schwerpunktlage in allen drei Dimensionen auf der Fördereinrichtung bestimmen zu können, sind Verfahren bekannt, bei denen die Dichteverteilung im Stückgutteil optisch ermittelt wird (zum Beispiel durch Röntgenverfahren). Diese Verfahren sind jedoch sehr aufwendig und teuer. Ferner müssen bei den oben beschriebenen Verfahren die Stückgutteile zum Bestimmen der Schwerpunktlage stark abgebremst oder sogar angehalten werden.

Weiterer Stand der Technik sind die JP H06 123669 A und die JP 2010 085182 A.

Aufgabe der vorliegenden Erfindung ist es, die sich aus dem nächstliegenden Stand der Technik ergebenden Probleme zu überwinden und eine Vorrichtung und ein Verfahren zur Verfügung zu stellen, die es ermöglichen effizient, schnell und einfach die Schwerpunktlage verschiedener Stückgutteile in drei Dimensionen zu ermitteln.

Die Aufgabe wird erfindungsgemäß durch eine Fördervorrichtung zum Ermitteln der Lage eines Massenschwerpunkts eines auf einer Förderoberfläche eines Lastaufnahmemittels der Fördervorrichtung aufliegenden Stückgutteils nach Anspruch 1 gelöst. Bevorzugte Weiterbildungen sind in den abhängigen Ansprüchen beschrieben. Die Fördervorrichtung weist zumindest zwei voneinander beabstandete Kraftmesser zum Messen von Gewichtskraftkomponenten der Fördervorrichtung, eines Förderers oder eines Lastaufnahmemittels auf. Die Kraftmesser können quer zur Förderrichtung und/oder in Förderrichtung in einem festgelegten oder einstellbaren Abstand voneinander angeordnet sein. Bei nur zwei Kraftmessern ist jeweils eine Messung an zwei unterschiedlichen, in Förderrichtung beabstandeten Positionen oder Förderpositionen des Stückgutteils erforderlich. Eine Messung genügt bei drei, vier oder mehr Kraftmessein, die linear unabhängig angeordnet sind, d.h. an den Ecken eines in der Förderoberfläche liegenden Dreiecks oder Rechtecks.

Die Erfindung sieht einen ersten und einen zweiten Förderer vor. Dabei ist wenigstens ein Teil der Förderoberfläche in einer ersten Wiegeebene angeordnet oder anordenbar. Ferner ist wenigstens ein Teil der Förderoberfläche in einer zweiten Wiegeebene angeordnet oder anordenbar. Dabei weisen die erste Wiegeebene und die zweite Wiegeebene einen von Null verschiedenen Winkel zueinander auf. Normalenvektoren der Wiegeebenen können in einer parallel zur Förderrichtung angeordneten Vertikalebene verlaufen, und die erste oder zweite Wiegeebene kann horizontal sein. Die Fördervorrichtung weist weiterhin eine Positionserfassungseinrichtung auf, mittels derer die äußeren Abmessungen, zumindest Länge und Breite, bevorzugt auch eine Höhe, und/oder eine Position des Stückgutteils auf der Förderoberfläche erfassbar sein kann.

Ferner ist eine Auswerteeinrichtung vorgesehen, mit der die Lage des Massenschwerpunkts des Stückgutteils aus den Gewichtskraftkomponenten bestimmbar ist, die bei Anordnung der Förderoberfläche in der ersten Wiegeebene und in der zweiten Wiegeebene gemessen werden, bei Messung(en) in mindestens einer Position des Stückgutteils je Orientierung der Förderoberfläche, und den Informationen über Position und Wiegeebene (Neigung).

Die erfindungsgemäße Fördervorrichtung bietet den Vorteil, dass einfach und präzise der Massenschwerpunkt eines Stückgutteils ermittelt werden kann. Dabei ermöglicht die Vorrichtung die Ermittlung von Massenschwerpunkten in Stückgutteilen verschiedener Geometrien. Außerdem ist es möglich, den Massenschwerpunkt zu bestimmen, ohne die Fördervorrichtung anzuhalten, also ohne die Förderbewegung des Stückgutteils zu unterbrechen.

Insbesondere kann die Lage des Massenschwerpunkts innerhalb der Körpergeometrie des Stückgutteils ermittelt werden. Dazu kann über die Positionserfassungseinrichtung die Körpergeometrie in mindestens zwei Dimensionen, bevorzugt in drei Dimensionen ermittelt werden. Dazu können zwei Positionserfassungsmittel die Abmessung(en) und/oder Position des Stückgutteils aus zwei unterschiedlichen Richtungen ermitteln, beispielsweise in einer ersten Richtung quer zur Förderrichtung und in einer zweiten Richtung parallel zur Förderrichtung. Es ist auch möglich, dass Stückgutteile mit Körpergeometrie oder Abmessungen gefördert werden, die in einem Speicher einer Steuerung hinterlegt sind. Dann kann es genügen, einen oder mehrere Referenzpunkte eines Stückgutteils zu bestimmen. Zum Beispiel kann die Position einer oder mehrerer Außenkanten, -wände, -ecken oder Referenzmarkierungen ermittelt werden, um die Position des Stückgutteils auf der Förderoberfläche zu bestimmen.

Die Körpergeometrie eines Stückgutteils kann, ggf. zusammen mit anderen Informationen über das Stückgutteil, in einem Speicher hinterlegt sein. Ein Barcode, eine Seriennummer oder eine vergleichbare Identifikationsmarkierung, die auf dem Stückgutteil angebracht ist, kann von der Positionserfassungseinrichtung oder einem zusätzlichen Mittel gelesen werden. Anhand des Barcodes, der Seriennummer oder der vergleichbaren Identifikationsmarkierung können die über das Stückgutteil im Speicher hinterlegten Daten abgerufen werden. Nach dem Durchführen der Messungen und/oder der Ermittlung des Massenschwerpunkts können diese neu gewonnen Informationen ebenfalls unter Verwendung des Barcodes, der Seriennummer oder der vergleichbaren Identifikationsmarkierung in dem Speicher hinterlegt werden.

Die Lage des Massenschwerpunkts wird räumlich, d.h. in Bezug auf drei Koordinatenrichtungen bestimmt. Eine Möglichkeit, die Lage des Massenschwerpunkts in einem dreidimensionalen Körper anhand von Gewichtskraftmessungen eindeutig zu bestimmen, besteht darin, Gewichtskraftkomponenten an unterschiedlichen Positionen zumindest in zwei unterschiedlichen Ausrichtungen des Körpers zu messen. Dies wird gemäß der vorliegenden Erfindung durch das unterschiedliche Ausrichten der Förderoberfläche ermöglicht. Dazu kann ein Teil der Förderoberfläche, in mehrere Ausrichtungen schwenkbar sein, indem die Fördervorrichtung oder ein davon umfasster Förderer um eine vorgegebene Achse geschwenkt wird.

Die Fördervorrichtung kann Aktoren aufweisen, mittels denen die Förderoberfläche oder ein erster und/oder ein zweiter Teil davon schwenkbar ist/sind. Die Aktoren sind bevorzugt pneumatisch, hydraulisch oder elektrisch antreibbar.

Ein Teil der Förderoberfläche kann in einer dritten Wiegeebene angeordnet oder anordenbar sein. Die dritte Wiegeebene kann in einem von Null verschiedenen Winkel zu der ersten und zweiten Wiegeebene angeordnet sein.

Durch eine dritte Wiegeebene kann die Flexibilität und Sicherheit der Messeinrichtung erhöht werden. Ferner ist es möglich, dass Stückgutteile gefördert werden, die innerhalb des Stückgutteils frei bewegliche Elemente umfassen. Dies können zum Beispiel Kartons oder Verpackungen sein, deren Inhalt innerhalb des Kartons oder der Verpackung lose oder in Grenzen beweglich ist. Durch eine dritte Wiegeebene kann die Bewegungsfreiheit der frei beweglichen Elemente innerhalb des Stückgutteils in zwei Koordinatenrichtungen parallel zur Wiegeebene ermittelt werden.

Eine Schnittlinie von zwei in einem vorgegebenen Winkel zueinander angeordneten Wiegeebenen kann parallel oder senkrecht zu einer Förderrichtung des Stückguts verlaufen, und sie kann insbesondere horizontal verlaufen.

Bevorzugt wird das gesamte Gewicht der Fördervorrichtung oder eines davon umfassten Förderers von den Kraftmessern getragen. Entsprechend können die Kraftmesser als Lager für die Fördervorrichtung oder einen Förderer dienen. So können alle Gewichtskraftkomponenten von den Kraftmessern gemessen werden, ohne dass Lagerkräfte, die aus Gewichtskräften resultieren, unbestimmt bleiben.

Die Kraftmesser können Wägezellen, z.B. mit Dehnungsmessstreifen (DMS-Wägezellen), optische Gewichtsmesszellen, Schwingungsgewichtzellen oder Sensormatten sein.

Alternativ können Kraftmesser in einem Lastaufnahmemittel der Fördervorrichtung oder eines davon umfassten Förderers integriert sein oder unmittelbar unterhalb des Lastaufnahmemittels angeordnet sein, beispielsweise wenn das Lastaufnahmemittel als Förderband oder Rollenanordnung ausgebildet ist. In diesem Fall muss nur das vergleichsweise geringe Gewicht des Lastaufnahmemittels und nicht das des gesamten Förderers bei der Auswertung der Messungen berücksichtigt werden.

Die Fördervorrichtung kann außerdem eine Steuereinrichtung mit einem Speicher zum Speichern der gemessenen Werte der Gewichtskraftkomponenten aufweisen.

Die Positionserfassungseinrichtung umfasst bevorzugt optische Sensoren, z.B. Kameras, Lasersensoren oder Infrarotschranken, akustische Sensoren, anderen wellenbasierte Sensoren, mechanische Sensoren und/oder eine Wegstreckenermittlung.

Ferner ist ein Verfahren gemäß Anspruch 12 zum Ermitteln eines Massenschwerpunkts eines auf einer Fördervorrichtung in einer Position auf einer Förderoberfläche befindlichen Stückgutteils Teil der Erfindung.

Entsprechend der Erfindung wird die Position des Stückgutteils einmal in der ersten Wiegeebene und einmal in der zweiten Wiegeebene ermittelt.

Wenn nur zwei insbesondere quer zur Förderrichtung voneinander beabstandete Kraftmesser vorhanden sind, muss für eine erste Orientierung (Wiegeebene) der Förderoberfläche eine Messung an zwei unterschiedlichen, in Förderrichtung beabstandeten Positionen des Stückgutteils erfolgen, und mindestens eine weitere Messung in einer zweiten Orientierung (Wiegeebene) der Förderoberfläche. Bei drei, vier oder mehr Kraftmessern genügt eine einzige Messung in einer zu bestimmenden Position des Stückgutteils pro Orientierung der Förderoberfläche (Wiegeebene).

Dabei kann die Ermittlung des Massenschwerpunktes mit oder ohne Anhalten einer Förderbewegung des Stückgutteils erfolgen, sofern die Messung der Gewichtskräfte und die Erfassung der Position des Stückgutteils gleichzeitig erfolgt oder zumindest so, dass die Messung(en) einer oder mehreren bestimmten Position(en) zugeordnet werden kann (können).

Der Schritt c) des Verfahrens findet bevorzugt durch ein Schwenken der Förderoberfläche von einer ersten in eine zweite Wiegeebene oder ein Weiterfördern des Stückgutteils von einem ersten Förderabschnitt (oder Förderer) in einer ersten Wiegeebene auf einen zweiten Förderabschnitt (oder Förderer) in einer zweiten Wiegeebene statt.

Eine erfindungsgemäße Vorrichtung oder ein erfindungsgemäßes Verfahren können in verschiedenen Anwendungsbereichen zum Einsatz kommen.

Ein mögliches Anwendungsgebiet ist zum Beispiel die Palettierung von Stückgütern mit unterschiedlichen Abmessungen und Schwerpunkten, um ein vorteilhaftes Packmuster zu finden und dementsprechend die Stückgutteile zu einem stabilen Stückgutstapel anzuordnen und anschließend mit einer Folie zu überziehen.

Außerdem können die ermittelten Daten dazu verwendet werden, ein sicheres Handling der Pakete bei einer anschließenden Sortierung auf einer Sortieranlage (zum Beispiel einem Kippschalensorter oder einem Crossbeltsorter) sicherzustellen. Dabei kann der Massenschwerpunkt insbesondere beim Einschleusen und Ausschleusen der Stückgutteile eine wichtige Rolle spielen. So können zum Beispiel Stückgutteile mit einer sehr ungünstigen Schwerpunktlage (zum Beispiel einer extremen Randlage des Schwerpunkts in dem Stückgutteil) leicht zu einer Fehlsortierung führen. Eine derartige Information bzgl. eines ungünstigen Massenschwerpunkts kann bspw. dafür genutzt werden, die weitere Handhabung des Stückgutteils auf einem Förderer, einer anschließenden Sortiervorrichtung oder den sonstigen Transport des Stückgutteils besonders sanft durchzuführen, wobei bspw. in Abhängigkeit von einer Bewertung der Schwerpunktlage in Bezug auf die Geometrie des Stückgutteils bestimmte maximale Beschleunigungen in Förderrichtung und/oder in Querrichtung vorgegeben werden können. Alternativ können Teile mit besonders ungünstiger Schwerpunktlage ausgeschleust und zum Beispiel manuell gehandhabt oder nachsortiert werden.

Weiterhin kann die Fördervorrichtung für die anschließende Planung von Frachttransporten (zum Beispiel die Lastverteilung bei Luftfracht, Schienenfracht, Frachtschiffen oder Lkw-Transporten), in denen die Gewichtsverteilung relevant für die Stabilität und die Effizienz des Fahrzeugs sein können, genutzt werden.

Die ermittelte Schwerpunktlage des Stückgutteils kann an eine zentrale Steuerung übermittelt und in lokalen oder zentralen Speichern mit Datenbanken gespeichert werden. Der Speicher bzw. die Datenbank kann bereits Informationen über ein Stückgutteil enthalten. Solche Informationen können Identitätsinformationen oder Abmessungen, Gewicht, Fotos, Barcodes, Bestimmungsort, Herkunftsort, Gefahren-oder Warnhinweise, Inhaltsangaben, Kunden-/Empfänger-/Herstellerinformationen usw. umfassen. Diese können den Informationen der Schwerpunktlage zugeordnet bzw. damit verknüpft und gemeinsam gespeichert werden.

Im Folgenden werden einige beispielhafte Ausführungsformen anhand einer Zeichnung beschrieben.

Fig. 1.1 zeigt eine erfindungsgemäße Fördervorrichtung in einer Draufsicht;

Fig. 1.2 zeigt die Fördervorrichtung aus Fig. 1.1 in einer Seitenansicht;

Fig. 2.1 zeigt eine erfindungsgemäße Fördervorrichtung in einer Draufsicht;

Fig. 2.2 zeigt die Fördervorrichtung aus Fig. 2.1 in einer Seitenansicht;

Fig. 2.3 zeigt eine Fördervorrichtung aus Figur 2.2 nach einem Schwenken der Förderoberfläche;

Fig. 3.1 zeigt einen Ausschnitt eines Lastaufnahmemittels mit den wirkenden Kräften;

Fig. 3.2 zeigt das Lastaufnahmemittel aus Fig. 3.1 nach einem Schwenken der Förderoberfläche, und

Fig. 3.3 zeigt das Lastaufnahmemittel aus Fig. 3.1 in einer Draufsicht.

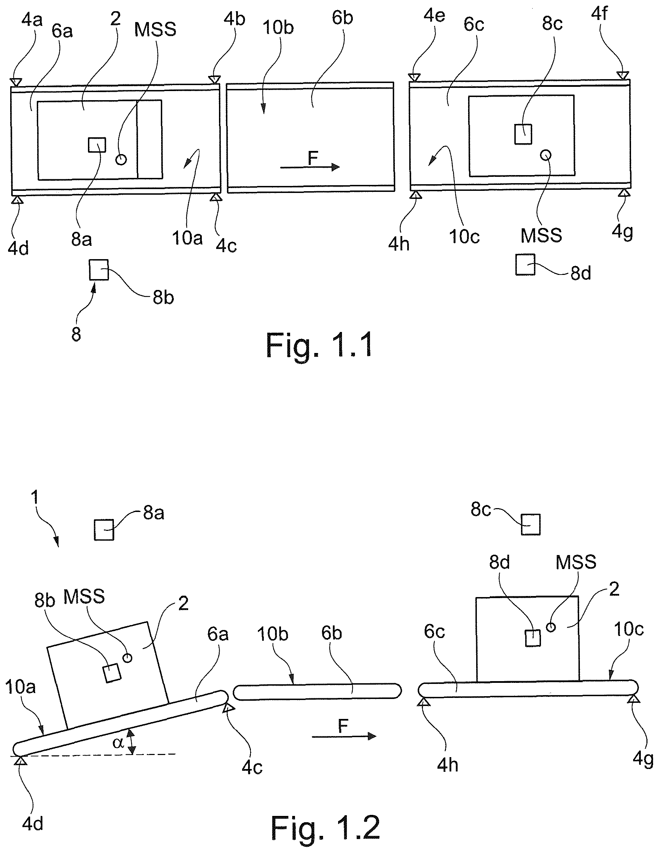

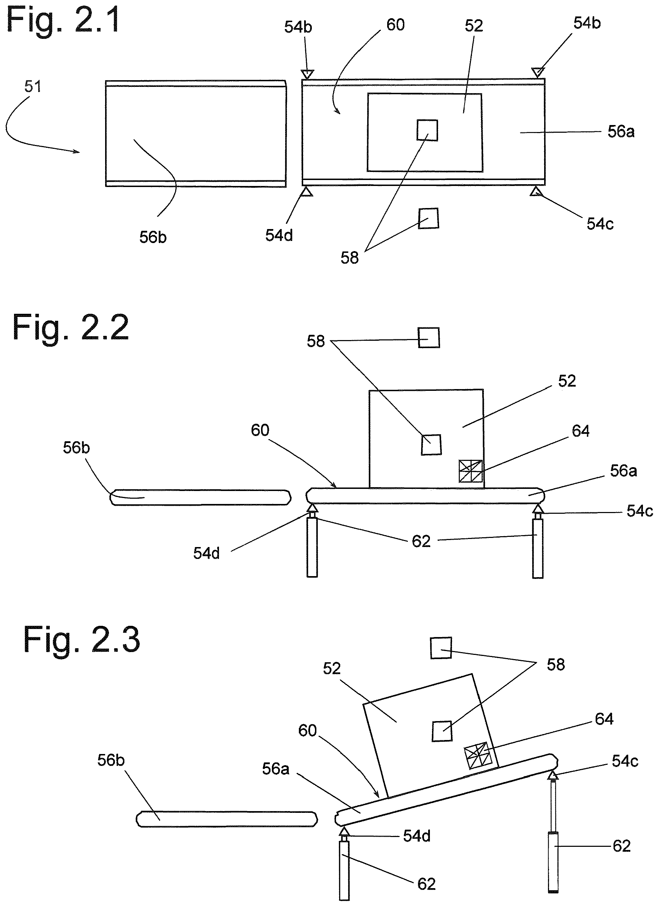

Ein Stückgutteil 2 kann auf einer Fördervorrichtung 1 in mindestens zwei unterschiedlichen Ausrichtungen im Raum positioniert werden. Dabei geht es insbesondere darum, das Stückgutteil auf zwei unterschiedlich geneigten Ebenen in Bezug auf den Vektor g der Gravitationsbeschleunigung anzuordnen. Zu diesem Zweck kann das Stückgutteil 2 entweder über zwei unterschiedliche jeweils mit Kraftmessern 4a, 4b, 4c, 4d, 4e, 4f, 4g, 4h ausgestattete Förderabschnitte 6a, 6c befördert werden, wie in den Figuren 1.1 und 1.2 dargestellt, oder ein mit Kraftmessern 54a, 54b, 54c, 54d ausgestatteter Förderabschnitt 56a, auf dem sich das Stückgutteil 52 befindet, kann geschwenkt werden, wie in den Figuren 2.1, 2.2 und 2.3 dargestellt. Die einzelnen Förderabschnitte können von einem einzigen Förderer, z.B. Gurtförderer, mit einem einzigen Lastaufnahmemittel, oder jeweils von einzelnen Förderern mit einzelnen Lastaufnahmemitteln gebildet sein.

In der in Figur 1.1 dargestellten Ausführungsform weisen die beiden in der Draufsicht rechteckförmigen Förderabschnitte 6a, 6b jeweils vier Kraftmesser 4a, 4b, 4c, 4d, 4e, 4f, 4g, 4h auf, die an Ecken der Förderabschnitte 6a, 6c angeordnet sind. Die Kraftmesser 4a, 4b, 4c, 4d, 4e, 4f, 4g, 4h tragen die Förderabschnitte oder Förderer 6a, 6c, so dass die gesamte Gewichtskraft des jeweiligen Förderabschnitts 6a, 6c und des sich darauf befindlichen Stückgutteils 2 auf den Kraftmessern 4a, 4b, 4c, 4d, 4e, 4f, 4g, 4h aufliegt. Die Kraftmesser 4a, 4b, 4c, 4d, 4e, 4f, 4g, 4h können so ausgeführt sein, dass die aufliegenden Gewichtskräfte lediglich in einer vorbestimmten Richtung, etwa einer Koordinatenrichtung x, y, z auf die Kraftmesser 4a, 4b, 4c, 4d, 4e, 4f, 4g, 4h wirken können. So können zum Beispiel Führungen vorgesehen sein, die lediglich Kräfte oder Kraftkomponenten in vertikaler Richtung (also y-Richtung) auf die Kraftmesser 4a, 4b, 4c, 4d, 4e, 4f, 4g, 4h zulassen.

Seitlich und oberhalb der Fördererabschnitte 6a, 6c sind jeweils Positionserfassungsmittel 8a, 8b, 8c, 8d der Positionserfassungseinrichtung 8 vorgesehen, die die Position des Stückgutteils 22 auf einer Förderoberfläche 10a, 10c des Förderabschnitts 6a, 6c ermitteln. Die Positionserfassungsmittel 8 können optische Erfassungsmittel, wie zum Beispiel Kameras, Lichtschranken, Lichtvorhänge, Lasersensoren, Laserschranken, o. ä. sein. Alternativ oder zusätzlich können Positionserfassungsmittel 8 als andere elektromagnetische oder schallbasierte Erfassungsmittel ausgeführt sein. Als weitere Variante sind mechanische Erfassungsmittel denkbar. So kann zum Beispiel zumindest in einer Richtung eine Führung vorgesehen sein, zum Beispiel entlang der Förderrichtung F des Stückgutteils 2, die die Position des Stückgutteils 2 in einer dazu orthogonalen Richtung festlegt. Alternativ können zum Beispiel nachgiebige Anschlagssensoren genutzt werden.

Zwischen den beiden Förderabschnitten 6a, 6c ist ein Förderabschnitt 6b ohne Kraftmesser vorgesehen. Die bevorzugte Förderrichtung F für Stückgutteile 2 in der dargestellten Ausführungsform ist von links nach rechts. Dadurch wird gewährleistet, dass bei dem Übergang zwischen zwei Förderabschnitten 6a, 6b mit unterschiedlichen Steigungen das Stückgutteil im Moment des Kippens von dem einen Förderabschnitt auf den anderen Förderabschnitt keinen Schlag auf die Kraftmesser des Förderabschnitts, auf den das Stückgutteil 2 kippt, verursacht. Würden die beiden Förderabschnitte 6a, 6c direkt aneinander grenzen, würde ein Stückgutteil 2 mit seiner unteren Auflagefläche zunächst den Neigungswinkel $\alpha$ des ersten Förderabschnitts 6a einnehmen. Wird der Schwerpunkt des Stückgutteils nun über das Ende des ersten Förderabschnitts 6a hinaus gefördert, kippt das Stückgutteil 2 schlagartig auf den zweiten, folgenden Förderabschnitt 6c und kommt mit seiner Unterseite im Neigungswinkel des zweiten Förderabschnitts zum Aufliegen. Dadurch würde ein Schlag auf die Kraftmesser 4e, 4f, 4g, 4h des zweiten Förderabschnitts 6c verursacht. Gleiches gilt, wenn die Förderrichtung F umgekehrt würde, sodass Stückgutteile 2 von rechts nach links gefördert würde. Dann würde ein Stückgutteil beim Übergang zwischen dem Förderabschnitt 6b ohne Kraftmesser und dem ersten, linken Förderabschnitt 6a auf die Kraftmesser des ersten, linken Förderabschnitts 6a kippen und dort eine schlagähnliche Kraft verursachen. In dem in den Figuren 1.1 und 1.2 dargestellten Ausführungsbeispiel ist der erste Förderabschnitt bzw. Förderer 6a in einem ersten Neigungswinkel $\alpha$ zur Horizontalebene angeordnet. Daran anschließend ist ein Förderabschnitt 6b ohne Kraftmesser angeordnet, sodass ein Stückgutteil 2 von dem ersten Förderabschnitt 6a entlang der Förderrichtung F auf den zweiten Förderabschnitt 6b gefördert werden kann. Dabei befinden sich die Förderoberflächen 10a und 10b des ersten und des zweiten Förderabschnitts 6a, 6b am Übergabepunkt des Stückgutteils in etwa auf gleicher Höhe. Wenn das Stückgutteil mit seinem Massenschwerpunkt die Endkante des ersten Förderabschnitts überquert hat, kippt das Stückgutteil 2 nach rechts, bis es mit seiner Unterseite auf der Förderoberfläche 10b des zweiten Förderabschnitts zum Aufliegen kommt. Der zweite Förderabschnitt 6b besitzt keine Kraftmesser, so dass der Impuls durch das Kippen des Stückgutteils nicht auf Kraftmesser einwirkt. Ein dritter Förderabschnitt 6c ist anschließend an den zweiten Förderabschnitt 6b horizontal, in einer Ebene mit dem zweiten Förderabschnitt 6b, angeordnet. Entsprechend findet hier kein Kippen des Stückgutteils 2 beim Übergang auf den dritten Förderabschnitt 6c statt. Alternativ kann der dritte Förderabschnitt 6c in einem Neigungswinkel zur Horizontalen angeordnet sein. Bevorzugt ist der dritte Förderabschnitts 6c dann aber ansteigend angeordnet, sodass das Stückgutteil vom zweiten Förderabschnitt 6b zum dritten Förderabschnitt 6c aufwärts gefördert wird und so kein schlagartiger Impuls auf die Kraftmesser des dritten Förderabschnitts 6c entstehen kann.

Die Figuren 2.1, 2.2 und 2.3 zeigen eine beispielhafte Ausführung, die nicht Teil der Erfindung ist, bei der lediglich ein Förderer oder Förderabschnitt 56a mit Kraftmessern 54a, 54b, 54c, 54d ausgeführt ist. Dafür weist der Förderabschnitt 54a mindestens einen Aktor 62 auf, mittels dem der Neigungswinkel $\alpha$ des Förderabschnitts 54a verstellbar ist. Im dargestellten Ausführungsbeispiel sind die Aktoren 62 pneumatische Zylinder. Alternativ können aber auch hydraulische Zylinder oder elektrische Antriebe vorgesehen sein. Alternativ zu der dargestellten Ausführungsform als linearer Antrieb kann ein Aktor als rotatorischer Schwenkantrieb vorgesehen sein. Insbesondere bei elektrischen Antrieben kann der Förderabschnitt auf einer drehbaren Welle gelagert sein, die mittels des elektrischen Antriebs gesteuert verschwenkbar ist. Unabhängig von der Art des Aktors ist bevorzugt zumindest ein Kraftmesser 54a, 54b, 54c, 54d zwischen dem Aktor 62 und dem Förderabschnitt 56a positioniert.

Figur 2.2 zeigt den Förderabschnitt 56a in einer ersten Wiegeebene. Die erste Wiegeebene ist im dargestellten Beispiel horizontal ausgerichtet. Dies bietet den Vorteil, dass ein Stückgutteil 52 von einem benachbarten, kraftmesserlosen Förderabschnitt 56b auf den Förderabschnitt 56a gefördert werden kann, ohne dabei einen Übergangsbereich wie Kante, Stufe oder Winkeländerung überwinden zu müssen. Befindet sich das Stückgutteil 52 auf dem Förderabschnitt 56a, kann eine erste Messung der Gewichtskraftkomponenten an den Lagerstellen mittels der Kraftmesser 54a, 54b, 54c, 54d erfolgen. Zugleich wird die Position des Stückgutteils 2 auf der Förderoberfläche 60a des Förderabschnitts 56a mittels der Positionserfassungseinrichtung 58 ermittelt. Anschließend wird der Förderabschnitt 56a um einen Neigungswinkel $\alpha$ um eine Schwenkachse in eine zweite Wiegeebene geschwenkt. Die Schwenkachse kann grundsätzlich beliebig ausgerichtet sein, solange sie nicht vertikal, also parallel zu dem Vektor g der Erdbeschleunigung verläuft. Bevorzugt ist die Schwenkachse jedoch horizontal und entweder parallel oder senkrecht zur Förderrichtung F des Stückgutteils ausgerichtet, wie in Figur 2.3 dargestellt ist. In der zweiten Wiegeebene findet eine zweite Messung der Gewichtskraftkomponenten an den Lagerstellen mittels der Kraftmesser 54a, 54b, 54c, 54d und eine Ermittlung der Position des Stückgutteils 52 auf der Förderoberfläche 60 des Förderabschnitts 54a mittels der Positionserfassungseinrichtung 58 statt.

Die mit den Vorrichtungen der beiden oben beschriebenen Ausführungsbeispiele gemessenen Daten werden an eine Steuereinrichtung mit einem Speicher übertragen. In dem Speicher können bereits andere Daten hinterlegt sein. Dabei ist das Stückgutteil 2, 52 bevorzugt über einer Identifikationsmarkierung 64 eindeutig einem Datensatz und/oder Speicherplatz zugeordnet. Die Identifikationsmarkierung 64 ist bevorzugt ein Element, das auf der Außenseite des Stückgutteils 2, 52 aufgebracht ist, und von der Positionserfassungseinrichtung oder einem anderen optischen Sensor der Fördervorrichtung 1, 51 gelesen werden kann. Eine optische Identifikationsmarkierung 64 kann beispielsweise ein Barcode, eine Seriennummer o. ä. sein. Alternativ kann das Stückgutteil 2, 52 auch über einen elektrischen, magnetischen oder elektromagnetischen Sender verfügen, der einem entsprechenden Empfänger der Fördervorrichtung 1, 51 die Identifikationsinformationen mitteilt.

Die Steuereinrichtung errechnet den Massenschwerpunkt aus den gemessenen Daten. Dazu kann eine selbstlernende Software (z.B. eine künstliche Intelligenz) genutzt werden oder ein Algorithmus, der ein sich aus den gemessenen Gewichtskraftkomponenten und den bekannten Geometriedaten ergebendes Gleichungssystem löst.

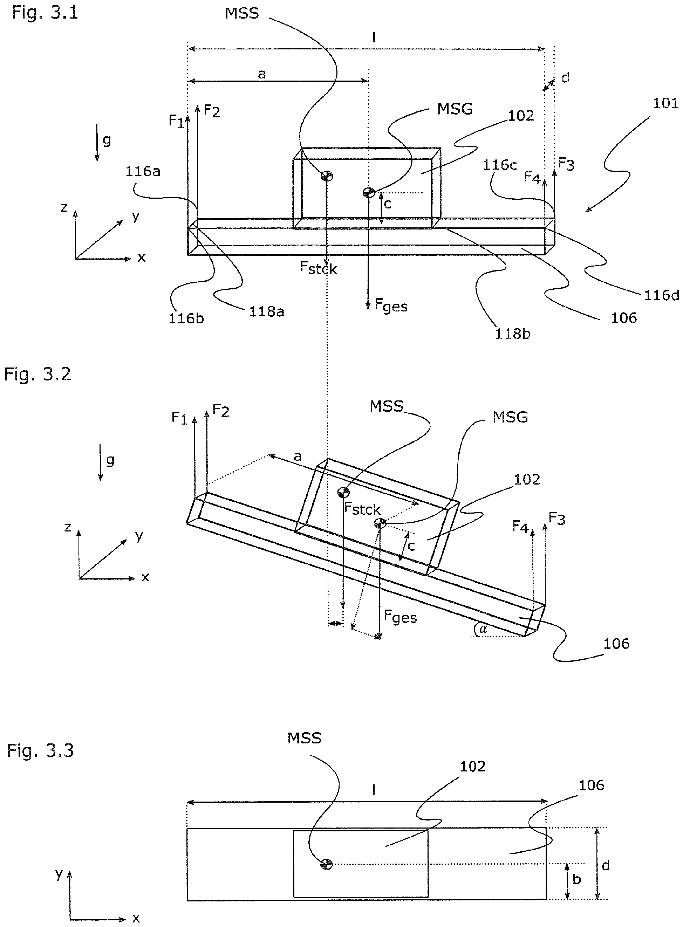

Anhand der Figuren 3.1 und 3.2 wird im Folgenden erläutert, wie eine Steuereinrichtung die Masse des Stückgutteils 2 und die Lage des Massenschwerpunkts MSS des Stückgutteils aus den gemessenen Gewichtskraftkomponenten ermitteln kann. Dabei sind die Kräftepfeile in ihrer Länge nicht verhältnismäßig sondern deuten lediglich Veränderungen der Beträge an. Gleiches gilt für die Lage der Schwerpunkte.

Für das dargestellte System werden vier unbekannte Variablen ermittelt. Dies sind drei Ortskoordinaten (in x, y und z Richtung), um die Lage des Massenschwerpunkt des Stückgutteils MSS im dreidimensionalen Raum eindeutig zu definieren, und die Gewichtskraft $F_{stck}$ des Stückgutteils 102. Die Gewichtskraft $F_{stck}$ des Stückgutteils 102 lässt sich über eine Gesamtkräftebilanz errechnen. Werden lediglich Kräfte in vertikaler Richtung gemessen, zum Beispiel wenn der Förderabschnitt 106 vertikal geführt gelagert ist, so dass lediglich vertikale Kräfte auf die Kraftmesser wirken, können maximal zwei weitere unabhängige Gleichungen in der ersten Wiegeebene erstellt werden. Dazu sind mindestens drei Kraftmesser an drei unterschiedlichen Messstellen 116a, 116b, 116c, 116d notwendig. Im dargestellten Ausführungsbeispiel sind vier Messstellen 116a, 116b, 116c, 116d vorgesehen, um eine stabile und symmetrische Lagerung des Förderabschnitts 106 zu gewährleisten.

Um das oben beschriebene Gleichungssystem zu lösen, müssen mindestens vier Gleichungen in zwei unterschiedlichen Wiegeebenen ermittelt werden.

Eine Vorgehensweise ist es, in einer ersten Wiegeebene, zum Beispiel in einer horizontalen Ebene, wie in Fig. 3.1 dargestellt, die Gewichtskraft des Stückgutteils 102 und den Flächenschwerpunkt des Stückgutteils 102 projiziert auf die erste Wiegeebene zu ermitteln. In einem zweiten Schritt kann dann in einer zweiten Wiegeebene eine weitere Gleichung aufgestellt werden, um die Höhe c des Massenschwerpunkts MSS, also den Abstand zu der ersten Wiegeebene, zu ermitteln.

Die gesamte Gewichtskraft $F_{ges}$, die aus der Masse des Stückgutteils 102 und des Förderabschnitts 106 resultiert, ergibt sich im dargestellten Ausführungsbeispiel aus der Summe aller vier gemessenen Gewichtskräfte F1, F2, F3, F4.

$$F_{ges} = F_1 + F_2 + F_3 + F_4$$

Weiterhin können zwei Momentengleichungen aufgestellt werden, wobei die Momentengleichungen um Achsen gebildet werden können, die in der Wiegeebene liegen. So kann verhindert werden, dass eventuell von den Führungen der Lager aufgenommene Kräfte parallel zur Wiegeebene Einfluss auf die Momentengleichung haben.

In einem einfachen Rechenbeispiel wird eine Momentengleichung um eine erste Kante 118a des Förderabschnitts 106 gebildet und eine zweite Momentengleichung um eine dazu senkrechte zweite Kante 118b des Förderabschnitts 106.

$$F_{ges} * a = (F_3 + F_4) * l$$

$$F_{ges} * b = (F_2 + F_3) * d$$

Wie aus Figur 3.3 hervorgeht, weist der Förderabschnitt 106 eine Breite d und eine Länge 1 auf. Die Kraftmesser sind dabei an den Ecken des Förderabschnitts 106 angeordnet, sodass die Messstellen 116c und 116d einen Abstand 1 zu den Messstellen 116a, 116b und der ersten Kante 118a haben und die Messstellen 116b und 116c einen Abstand 1 zu den Messstellen 116a, 116d und der zweiten Kante 118b haben.

Der Angriffspunkt der Gesamtgewichtskraft $F_{ges}$ aus der Summe der Gewichtskräfte der Masse des Stückgutteils $F_{stck}$ und des Förderabschnitts befindet sich in einem Abstand a zu der ersten Kante 118a und in einem Abstand b zu der zweiten Kante 118b.

Der Einfachheit halber wird im dargestellten Beispiel angenommen, dass das Stückgutteil 102 auf der Fördervorrichtung 101 zwischen dem Wiegen in der ersten Wiegeebene und dem Wiegen in der zweiten Wiegeebene nicht entlang der Förderrichtung F bewegt wird, bzw. sich auf dem ersten Förderabschnitt an der gleichen Position wie auf dem zweiten Förderabschnitt zum Zeitpunkt des Wiegens befindet. Wird das Stückgutteil dagegen zwischen den Messvorgängen gefördert bzw. an zwei unterschiedlichen Positionen auf den beiden Messstellen gewogen, muss ein Zwischenrechenschritt durchgeführt werden. Dazu kann die Lage des Schwerpunkts MSS des Stückgutteils in Bezug auf den Förderabschnitt 106 ermittelt werden, indem ein Momentengleichgewicht aus der Gesamtgewichtskraft $F_{ges}$, der bekannten Gewichtskraft des Förderabschnitts und der bereits errechneten Gewichtskraft des Stückgutteils $F_{stck}$ gebildet wird, da die Lage des Massenschwerpunkts des Förderabschnitts 106 ebenfalls bekannt ist. Über die Lage des Massenschwerpunkts MSS in Bezug auf den Förderabschnitt 106 kann die Lage des Massenschwerpunkts in Bezug auf das Körpervolumen Stückgutteils 102, das mittels des Positionserfassungsmittels ermittelt wurde, ermittelt werden. Damit ist die Lage des Massenschwerpunkts MSS des Stückgutteils 102 in Bezug auf das Körpervolumen des Stückgutteils in zwei Koordinatenrichtungen x, y bekannt, nachdem das Stückgutteil 102 in der ersten Wiegeebene vermessen wurde. Entsprechend kann auch der Massenschwerpunkt des Stückgutteils in allen drei Koordinatenrichtungen x, y, z ermittelt werden, nachdem das Stückgutteil in einer zweite Wiegeebene gewogen und, falls erforderlich, dessen Position erneut ermittelt wurde.

Im dargestellten Beispiel ist in Figur 3.2 erkennbar, dass die Lage des Massenschwerpunkts MSS des Stückgutteils sich auch ohne ein Weiterbewegen des Stückgutteils 102 entlang der x-Richtung verlagert hat. Zudem hat sich die Lage bzw. Neigung der Wiegeebene verändert- Entsprechend kann eine vierte unabhängige Gleichung zur Ermittlung des Abstands c des Massenschwerpunkts MSG der Gesamtgewichtskraft $F_{ges}$ erstellt werden.

$$F_{ges} * \cos(\alpha) * a + F_{ges} * \sin(\alpha) * c = (F_3 + F_4) * \cos(\alpha) * l$$

Dabei kann erneut ein Momentengleichgewicht um die erste Kante 118a des Förderabschnitts 106 gebildet werden, da im vorliegenden Beispiel der Förderabschnitt um die erste Kante 118a geschwenkt wurde.

## Patentansprüche

1. Fördervorrichtung zum Ermitteln der dreidimensionalen Lage eines Massenschwerpunkts (MSS) eines auf einer Förderoberfläche (10a-c, 60a, 60b) eines Lastaufnahmemittels der Fördervorrichtung (1, 51, 101) aufliegenden Stückgutteils (2, 52, 102), mit zumindest zwei voneinander beabstandeten Kraftmessern (4a-h, 54a-d), die zum Messen von Gewichtskraftkomponenten (F1, F2, F3, F4) der Fördervorrichtung oder des Lastaufnahmemittels eingerichtet sind, wobei ein erster Teil der Förderoberfläche (10a-c, 60a, 60b) eines ersten Förderers in einer ersten Wiegeebene angeordnet ist und ein zweiter Teil der Förderoberfläche (10a-c, 60a, 60b) eines zweiten Förderers in einer zweiten Wiegeebene angeordnet ist, wobei die erste Wiegeebene und die zweite Wiegeebene in einem von Null verschiedenen Winkel ($\alpha$) zueinander angeordnet sind,

   und wobei der erste und der zweite Förderer jeweils zumindest zwei voneinander beabstandete Kraftmesser (4a-h) zum Messen von Gewichtskraftkomponenten (F1,F2,F3,F4) der Förderer oder von deren Lastaufnahmemitteln aufweist, wobei die Fördervorrichtung (1, 51, 101) weiterhin eine Positionserfassungseinrichtung (8, 58) aufweist, mit der eine Position des Stückgutteils (2, 52, 102) jeweils auf dem ersten Teil und auf dem zweiten Teil der Förderoberfläche (10a-c, 60a, 60b) erfassbar ist, und mit einer Auswerteeinrichtung, die zum Bestimmen der dreidimensionalen Lage des Massenschwerpunkts aus den in der ersten Wiegeebene und in der zweiten Wiegeebene gemessenen Gewichtskraftkomponenten (F1,F2,F3,F4) und aus den erfassten Positionen eingerichtet ist, wobei die Fördervorrichtung für eine gleichzeitige Erfassung der Gewichtskraftkomponenten (F 1,F2,F3,F4) und der Position des Stückgutteils jeweils auf dem ersten Teil der Förderoberfläche und dem zweiten Teil der Förderoberfläche eingerichtet ist.

2. Fördervorrichtung nach Anspruch 1, **dadurch gekennzeichnet, dass** die Förderoberfläche (60) um eine erste Achse in die erste Wiegeebene oder in die zweite Wiegeebene schwenkbar ist, wobei die erste Achse parallel oder quer zu der Förderrichtung und horizontal verlaufen kann.

3. Fördervorrichtung nach Anspruch 2, weiterhin Aktoren (62) aufweisend, mittels denen die Fördervorrichtung schwenkbar ist, wobei die Aktoren (62) pneumatisch, hydraulisch oder elektrisch antreibbar sein können.

4. Fördervorrichtung nach einem der vorhergehenden Ansprüche, **dadurch gekennzeichnet, dass** wenigstens ein Teil der Förderoberfläche (10a-c, 60a, 60b) in einer dritten Wiegeebene angeordnet oder anordnenbar ist, die in einem von Null verschiedenen Winkel zu der ersten und der zweiten Wiegeebene angeordnet ist.

5. Fördervorrichtung nach Anspruch 4, **dadurch gekennzeichnet, dass** eine erste Schnittlinie zwischen der ersten und der zweiten Wiegeebene quer oder parallel zu einer zweiten Schnittlinie zwischen der zweiten und der dritten Wiegeebene verläuft oder identisch mit dieser ist.

6. Fördervorrichtung nach einem der vorhergehenden Ansprüche, **dadurch gekennzeichnet, dass** eine Schnittlinie zwischen zwei Wiegeebenen parallel oder orthogonal zu einer Förderrichtung (F) des Stückguts (2, 52, 102) und horizontal verläuft.

7. Fördervorrichtung nach einem der vorhergehenden Ansprüche, **dadurch gekennzeichnet, dass** zumindest drei, bevorzugt vier Kraftmesser (4a-h, 54a-d) vorgesehen sind, die in einer Vertikalprojektion an Ecken eines Dreieckes oder Viereckes, insbesondere in Eckbereichen der Fördervorrichtung oder des oder jedes Förderers angeordnet sind.

8. Fördervorrichtung nach einem der vorhergehenden Ansprüche, **dadurch gekennzeichnet, dass** die Fördervorrichtung oder der oder jeder Förderer jeweils an Kraftmessern (4a-h, 54a-d) gelagert, bevorzugt aufliegend an diesen befestigt oder an diesen hängend ist.

9. Fördervorrichtung nach einem der vorhergehenden Ansprüche, **dadurch gekennzeichnet, dass** die Kraftmesser (4a-h, 54a-d) Wägezellen, z.B. mit Dehnungsmessstreifen (DMS-Wägezellen), optische Gewichtsmesszellen, Schwingungsgewichtszellen oder Sensormatten sind.

10. Fördervorrichtung nach einem der vorhergehenden Ansprüche, mit einer Steuereinrichtung zum Steuern einer Förderbewegung des Stückgutteils in Förderrichtung, und mit einem Speicher zum Speichern der gemessenen Gewichtskraftkomponenten.

11. Fördervorrichtung nach einem der vorhergehenden Ansprüche, **dadurch gekennzeichnet, dass** die Positionserfassungseinrichtung (8, 58) optische Sensoren, z.B. Kameras, Lasersensoren oder Infrarotschranken, akustische Sensoren, anderen wellenbasierte Sensoren, mechanische Sensoren und/oder eine Wegstreckenermittlung umfasst, wobei eine, zwei oder drei Abmessungen des Stückgutteils in einer, zwei oder drei Koordinationsrichtungen bestimmbar sein können, und/oder wobei eine an dem Stückgutteil angebrachte Identifikation lesbar ist und in einer Steuerung gespeicherten Daten des Stückgutteils zuordenbar ist, insbesondere dessen Abmessungen.

12. Verfahren zum Ermitteln der dreidimensionalen Lage eines Massenschwerpunkts (MSS) eines auf einer Fördervorrichtung (1, 51,101) in einer Position auf einer Förderoberfläche befindlichen Stückgutteils (2, 52, 102), unter Verwendung einer Fördervorrichtung nach einem der vorangehenden Ansprüche, mit den folgenden Schritten:

  a) Messen von zumindest zwei Gewichtskraftkomponenten (F1, F2, F3, F4) an mindestens zwei voneinander beabstandeten Messstellen (116a-d) in der ersten Wiegeebene, die durch den ersten Teil der Förderoberfläche (10a, 10c, 60a) gebildet wird, auf der das Stückgutteil (2, 52, 102) aufliegt;
  b) Gleichzeitig mit a), Ermitteln der Position des Stückgutteils (2, 52, 102) auf dem ersten Teil der Förderoberfläche in der ersten Wiegeebene;
  c) Messen von zumindest zwei Gewichtskraftkomponenten (F1, F2, F3, F4) an mindestens zwei voneinander beabstandeten Messstellen (116a-d) in der zweiten Wiegeebene, die durch den zweiten Teil der Förderoberfläche (10a, 10c, 60a) gebildet wird, auf der das Stückgutteil (2, 52, 102) aufliegt;
  d) Gleichzeitig mit c), Ermitteln der Position des Stückgutteils (2, 52, 102) auf dem zweiten Teil der Förderoberfläche in der zweiten Wiegeebene;
  e) Bestimmen der Lage des Massenschwerpunktes (MSS) des Stückgutteils (2, 52, 102) anhand der gemessenen Gewichtskraftkomponenten und der erfassten Positionen des Stückgutteils.

13. Verfahren nach Anspruch 12, **dadurch gekennzeichnet, dass** die Ermittlung des Massenschwerpunktes (MSS) im Stillstand oder während einer Förderbewegung des Stückgutteils (2, 52, 102) erfolgt.

**14.** Verfahren nach einem der Ansprüche 12 oder 13, **dadurch gekennzeichnet, dass** eine Identitätsinformation des Stückgutteils erfasst oder von einer zentralen Steuerung abgerufen und zusammen mit Lagedaten des Massenschwerpunkts an die Steuerung übermittelt wird.

**Claims**

**1.** Conveyor device for determining the three-dimensional position of a centre of gravity (MSS) of an item of piece goods (2, 52, 102) resting on a conveyor surface (10a-c, 60a, 60b) of a load-carrying device of the conveyor device (1, 51, 101), with at least two dynamometers (4a-h, 54a-d) which are spaced apart from one another and which are set up to measure weight force components (F1, F2, F3, F4) of the conveyor device or of the load-carrying device, wherein a first part of the conveyor surface (10a-c, 60a, 60b) of a first conveyor is arranged in a first weighing plane and a second part of the conveyor surface (10a-c, 60a, 60b) of a second conveyor is arranged in a second weighing plane, wherein the first weighing plane and the second weighing plane are arranged at angle ($\alpha$) to one another that is different from zero,

and wherein the first conveyor and the second conveyor in each case have at least two dynamometers (4a-h) spaced apart from one another for measuring weight force components (F1, F2, F3, F4) of the conveyors or of their load-carrying devices, wherein the conveyor device (1, 51, 101) furthermore has a position-detection device (8, 58) with which a position of the item of piece goods (2, 52, 102) can be detected respectively on the first part and on the second part of the conveyor surface (10a-c, 60a, 60b), and with an evaluation device that is set up to determine the three-dimensional position of the centre of gravity from the weight force components (F1, F2, F3, F4) measured in the first weighing plane and in the second weighing plane and from the recorded positions,
wherein the conveyor device is set up for the simultaneous recording of the weight force components (F1, F2, F3, F4) and of the position of the item of piece goods respectively on the first part of the conveyor surface and the second part of the conveyor surface.

**2.** Conveyor device according to claim 1, **characterised in that** the conveyor surface (60) can be tilted around a first axis into the first weighing plane or into the second weighing plane, wherein the first axis can run parallel to or transverse to the direction of transportation and horizontally.

**3.** Conveyor device according to claim 2, furthermore having actuators (62) by means of which the conveyor device can be tilted, wherein the actuators (62) can be driven pneumatically, hydraulically or electrically.

**4.** Conveyor device according to one of the preceding claims, **characterised in that** at least one part of the conveyor surface (10a-c, 60a, 60b) is or can be arranged in a third weighing plane which is arranged at an angle to the first and second weighing planes that is different from zero.

**5.** Conveyor device according to claim 4, **characterised in that** a first intersection line between the first and the second weighing planes runs transverse or parallel to a second intersection line between the second and the third weighing planes, or is identical to it.

**6.** Conveyor device according to one of the preceding claims, **characterised in that** an intersection line between two weighing planes runs parallel or orthogonally to a direction of transportation (F) of the item of piece goods (2, 52, 102) and horizontally.

**7.** Conveyor device according to one of the preceding claims, **characterised in that** at least three, preferably four dynamometers (4a-h, 54a-d) are envisaged, which in a vertical projection are arranged at corners of a triangle or rectangle, in particular in corner areas of the conveyor device, or of the conveyor, or of each conveyor.

**8.** Conveyor device according to one of the preceding claims, **characterised in that** the conveyor device or the conveyor or each conveyor is respectively mounted on dynamometers (4a-h, 54a-d), preferably affixed resting on them or suspended on them.

**9.** Conveyor device according to one of the preceding claims, **characterised in that** the dynamometers (4a-h, 54a-d) are load cells, e.g. with strain gauges (strain gauge load cells), optical weight measurement cells, dynamic load cells or sensor mats.

**10.** Conveyor device according to one of the preceding claims, with a control unit for controlling a conveying movement of the item of piece goods in the direction of transportation, and with a memory for storing the measured weight force components.

**11.** Conveyor device according to one of the preceding claims, **characterised in that** the position-detection device (8, 58) includes optical sensors, e.g. cameras, laser sensors or infrared barriers, acoustic sensors, other wave-based sensors, mechanical sensors and/or a route detector, wherein one, two or three dimensions of the item of piece goods can be determined in one, two or three coordination directions, and/or wherein an identification that is applied to the item of piece goods can be read and can be assigned to data for the item of piece goods that are stored in a control unit, particularly its dimensions.

**12.** Method for determining the three-dimensional position of a centre of gravity (MSS) of an item of piece goods (2, 52, 102) situated on a conveyor device (1, 51, 101) in a position on a conveyor surface, using a conveyor device according to one of the preceding claims, with the following steps:

a) measurement of at least two weight force components (F1, F2, F3, F4) at at least two measurement points (n6a-d) that are spaced apart from one another in the first weighing plane that is formed by the first part of the conveyor surface (10a, 10c, 60a) on which the item of piece goods (2, 52, 102) rests;
b) simultaneously with a), determination of the position of the item of piece goods (2, 52,102) on the first part of the conveyor surface in the first weighing plane;
c) measurement of at least two weight force components (F1, F2, F3, F4) at at least two measurement points (116a-d) that are spaced apart from one another in the second weighing plane that is formed by the second part of the conveyor surface (10a, 10c, 60a) on which the item of piece goods (2, 52, 102) rests;
d) simultaneously with c), determination of the position of the item of piece goods (2, 52, 102) on the second part of the conveyor surface in the second weighing plane;
e) determining the position of the centre of gravity (MSS) of the item of piece goods (2, 52, 102) on the basis of the measured weight force components and the recorded positions of the item of piece goods.

**13.** Method according to claim 12, **characterised in that** the centre of gravity (MSS) is determined at a standstill or during a conveying movement of the item of piece goods (2, 52, 102).

**14.** Method according to one of the claims 12 or 13, **characterised in that** identity information for the item of piece goods is recorded or retrieved from a central control unit and is transmitted to the control unit together with positional data for the centre of gravity.

**Revendications**

**1.** Dispositif d'acheminement et de détermination de la position tridimensionnelle du centre de gravité (MSS) d'un article de marchandises (2, 52, 102) reposant à la surface d'un convoyeur (10a-c, 60a, 60b) d'un dispositif de transport d'une charge du dispositif d'acheminement (1, 51, 101), avec au moins deux dynamomètres (4a-h, 54a-d) qui sont espacés les uns des autres et qui sont programmés pour mesurer des composantes de poids force (F1, F2, F3, F4) du dispositif d'acheminement ou du dispositif de transport d'une charge, et une première partie de la surface d'acheminement (10a-c, 60a, 60b) d'un premier convoyeur est implantée sur un premier plan de pesée et une deuxième partie de la surface d'acheminement (10a-c, 60a, 60b) d'un deuxième convoyeur est implantée sur un deuxième plan de pesée, et ce premier plan de pesée et ce deuxième plan de pesée sont disposés sous un angle (α), l'un par rapport à l'autre, qui est différent de zéro,

et le premier convoyeur et le deuxième convoyeur, dans chaque cas, ont au moins deux dynamomètres (4a-h) qui sont espacés les uns des autres et qui ont pour tâche de mesurer les composantes du poids force (F1, F2, F3, F4) des convoyeurs ou de leurs dispositifs de transport d'une charge, et le dispositif d'acheminement (1, 51, 101) a, en outre, un dispositif de détection de position (8, 58) qui permet de détecter une position de l'article de marchandises (2, 52,102) sur, respectivement, la première partie et la deuxième partie de la surface du convoyeur (10a-c, 60a, 60b), et avec un dispositif d'évaluation qui est programmé pour déterminer la position tridimensionnelle du centre de gravité à partir des composantes du poids force (F1, F2, F3, F4) mesurées dans le premier plan et dans le deuxième plan de pesée et à partir des positions enregistrées, et le dispositif d'acheminement est programmé pour l'enregistrement simultané des composantes du poids force (F1, F2, F3, F4) et de la position de l'article de marchandises, respectivement, sur la première partie de la surface d'acheminement et sur la deuxième partie de la surface d'acheminement.

2. Le dispositif d'acheminement que décrit la revendication 1, qui se **caractérise par le fait que** la surface d'acheminement (60) peut être inclinée autour d'un premier axe dans le premier plan de pesée ou dans le deuxième plan de pesée, et ce premier axe peut se déplacer en parallèle ou à la transversale du sens de transport et à l'horizontale.

3. Le dispositif d'acheminement que décrit la revendication 2, si ce n'est qu'il comporte, en outre, des actionneurs (62) qui permettent d'incliner ce dispositif d'acheminement, et ces actionneurs (62) ont un entraînement pneumatique, hydraulique ou électrique.

4. Le dispositif d'acheminement que décrit l'une ou l'autre des revendications précédentes, et qui se **caractérise par le fait que** la surface du convoyeur (10a-c, 60a, 60b) est disposée ou peut être disposée dans un troisième plan de pesée qui se situe à un certain angle par rapport aux premier et deuxième plans de pesée, et cet angle est différent de zéro.

5. Le dispositif d'acheminement que décrit la revendication 4, qui se **caractérise par le fait qu'**une première ligne d'intersection entre le premier plan de pesée et le deuxième plan de pesée se situe dans l'axe transversal ou parallèle par rapport à une deuxième ligne d'intersection entre le deuxième plan de pesée et le troisième plan de pesée, ou est identique.

6. Le dispositif d'acheminement que décrit l'une ou l'autre des revendications précédentes, et qui se **caractérise par le fait qu'**une ligne d'intersection entre deux plans de pesée est parallèle ou orthogonale à un sens de transport (F) de l'article de marchandises (2, 52, 102) et horizontale.

7. Le dispositif d'acheminement que décrit l'une ou l'autre des revendications précédentes, et qui se **caractérise par le fait qu'**au moins trois, de préférence quatre, dynamomètres (4a-h, 54a-d) sont prévus et, dans une projection verticale, sont disposés aux sommets d'un triangle ou d'un rectangle, en particulier aux coins du dispositif d'acheminement, du convoyeur ou de chaque convoyeur.

8. Le dispositif d'acheminement que décrit l'une ou l'autre des revendications précédentes, et qui se **caractérise par le fait que** le dispositif d'acheminement, le convoyeur ou chaque convoyeur vient, respectivement, se monter sur les dynamomètres (4a-h, 54a-d) et, de préférence, vient y reposer ou y est suspendu.

9. Le dispositif d'acheminement que décrit l'une ou l'autre des revendications précédentes, et qui se **caractérise par le fait que** les dynamomètres (4a-h, 54a-d) sont des cellules de charge équipées, par exemple, des jauges de contrainte (cellules de charge à jauges de contrainte), des cellules optiques de mesure de poids, des cellules dynamiques de charge ou des coussins à capteurs.

10. Le dispositif d'acheminement que décrit l'une ou l'autre des revendications précédentes, si ce n'est qu'il a un bloc de commande conçu pour réguler un mouvement d'acheminement de l'article de marchandises dans le sens de transport, et qu'il a une mémoire qui contient les composantes mesurées de poids force.

11. Le dispositif d'acheminement que décrit l'une ou l'autre des revendications précédentes, et qui se **caractérise par le fait que** le dispositif de détection de position (8, 58) comporte des capteurs optiques (par exemple, des caméras, des capteurs à laser ou des barrières d'infrarouges, des capteurs acoustiques, d'autres capteurs basés sur des ondes, des capteurs mécaniques et (ou) des capteurs de trajectoires, et si ce n'est qu'une, deux ou trois dimensions de l'article de marchandises peut ou peuvent être déterminées dans un, deux ou trois sens de coordination et (ou) si ce n'est qu'une identification qui s'applique à l'article de marchandises peut être lue et attribuée à des données pour cet article de marchandises que conserve un bloc de commande, en particulier ses dimensions.

12. Le procédé de détermination de la position tridimensionnelle d'un centre de gravité (MSS) d'un article de marchandises (2, 52, 102) qui se situe sur un dispositif d'acheminement (1, 51, 101) à une position sur la surface d'un convoyeur, en utilisant un dispositif d'acheminement que décrit l'une ou l'autre des revendications précédentes, en effectuant les étapes suivantes :

a) mesure d'au moins deux composantes de poids force (F1, F2, F3, F4) à au moins deux points de mesure (116a-d) qui sont espacés l'un de l'autre, dans le premier plan de pesée que forme la première partie de la surface du convoyeur (10a, 10c, 60a) contre laquelle repose l'article de marchandises (2, 52, 102)

b) en même temps que a), détermination de la position de l'article de marchandises (2, 52,102) sur la première partie de la surface du convoyeur, dans le premier plan de pesée

c) mesure d'au moins deux composantes de poids force (F1, F2, F3, F4) à au moins deux points de mesure (116a-d) qui sont espacés l'un de l'autre, dans le deuxième plan de pesée que forme la deuxième partie de la surface du convoyeur (10a, 10c, 60a) contre laquelle repose l'article de marchandises (2, 52, 102)

d) en même temps que c), détermination de la position de l'article de marchandises (2, 52, 102) sur la deuxième partie de la surface du convoyeur, dans le deuxième plan de pesée

e) détermination de la position du centre de gravité (MSS) de l'article de marchandises (2, 52, 102) sur la base des composantes mesurées du poids force et des positions enregistrées de cet article de marchandises.

13. Le procédé que décrit la revendication 12 et qui se **caractérise par le fait que** le centre de gravité (MSS) est déterminé à l'arrêt ou durant un mouvement d'acheminement de l'article de marchandises (2, 52, 102).

14. Le procédé que décrit la revendication 12 ou 13 et qui se **caractérise par le fait que** des informations portant sur l'identité de l'article de marchandises sont enregistrées ou recouvrées depuis le bloc central de commande puis sont transmises au bloc de commande avec des données portant sur la position du centre de gravité.

Fig. 1.1

Fig. 1.2

# Fig. 2.1

# Fig. 2.2

# Fig. 2.3

Fig. 3.1

Fig. 3.2

Fig. 3.3

**IN DER BESCHREIBUNG AUFGEFÜHRTE DOKUMENTE**

**In der Beschreibung aufgeführte Patentdokumente**

- US 20030075416 A1
- JP H06123669 A
- JP 2010085182 A